# EUROPEAN PATENT APPLICATION

(11) **EP 1 471 184 A2**
(43) Date of publication of application: **27.10.2004**
(21) Application number: 04076191.8
(22) Date of filing: 20.04.2004
(51) Int. Cl.: E02B 3/00

(54) **Mud-removal apparatus**

(30) Priority: 22.04.2003 IT MI20030835
(71) Applicant: Trasmetal S.p.A., 20124 Milan (IT)
(72) Inventor: Zucchetti, Dario, 20010 Cornaredo Milan (IT)
(74) Representative: Coppo, Alessandro

(57) **Abstract**

A mud-removal apparatus in particular intended for spray phosphating plants of products through zinc phosphates comprises a phosphating tank (11) containing a phosphating solution intended to supply a spray system (12) that carries out the spraying of products comprising a sedimentation reservoir (21), connected to the tank, intended to continuously receive the solution to be clarified to carry out the sedimentation of the mud and to send the phosphating tank (11) a clarified solution suitable for lowering the concentration of mud in the phosphating tank (11) and also keep the solution in constant agitation and a continuous filter (F1) connected to the sedimentation reservoir (21) and to the phosphating tank (11) for the filtration of the mud and the clarification of the solution removed from the tank.

## Description

The present invention refers to a mud-removal apparatus in particular intended for plants for spray-phosphating through zinc phosphates.

It is known that in modern varnishing processes of iron materials the so-called zinc-phosphating spray process is used on a large scale, which generates a coating on the surface of the metal consisting of a crystalline phosphate-based layer.

Such a layer creates a valid barrier against corrosion and substantially increases the resistance of the varnished layer.

The spraying of the products usually takes place inside a tunnel, through a piping circuit with suitable nozzles, supplied by a centrifugal pump that, in turn, draws from a tank below the tunnel.

A closed circuit is thus realised that allows the most advantageous use of products.

The various sizing parameters relative to piping, nozzles, pumps and containment tank are interdependent and can vary within rather narrow ranges.

The collection tank requires rather high volumes and consequently, in general, has a substantially long bottom.

The chemical formation process of the phosphate layer has the intrinsic and unavoidable drawback of the formation of mud created by the reaction sub-product, mainly consisting of insoluble mixtures of ferric phosphates.

This mud, that is generated as a result of 4÷6 grams for every m² of laminate chemically treated, is an agent that interferes with the correct execution of the treatment and also, in the case in which they come into contact with the spraying circuit, relatively quickly cause the clogging of the piping and of the nozzles with the consequent operating difficulty of the plant.

It is thus essential that the mud be removed from the tank of the plant, so as to limit their concentration in the bath to within limits imposed by the process conditions set for good surface treatment.

Considering the above, the problem is complex since, given the extension of the tank, the speed of movement of the liquid inside of it becomes very low allowing the decanting of the mud on the bottom of the tank and making its removal difficult.

In the prior art there are various systems through which it has been attempted to solve the aforementioned problem, however in each of them there are some drawbacks.

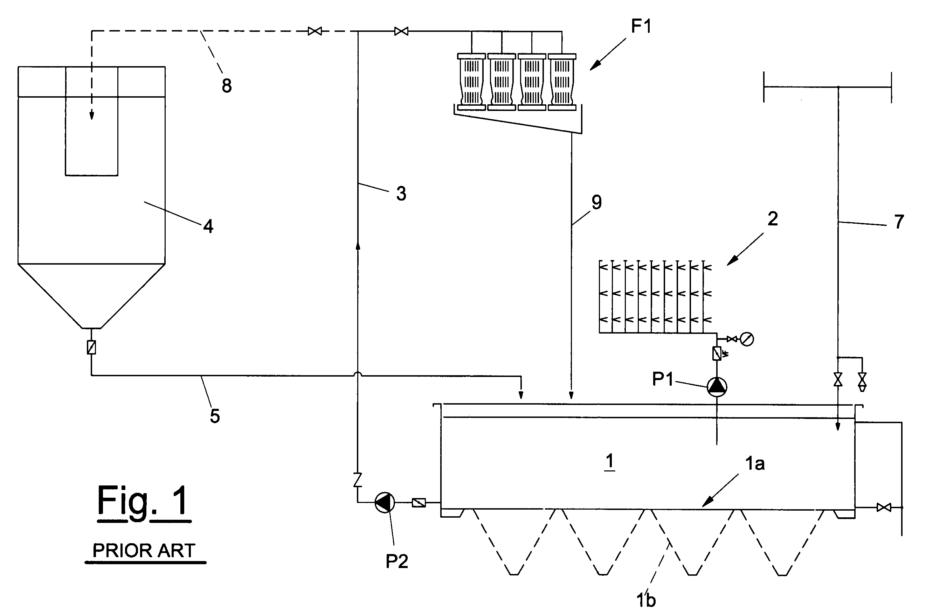

With reference to figures 1 to 5, the systems currently in use and their relevant characteristics are described hereafter.

In particular, figures 1 to 4 illustrate plants and their variants according to the prior art, in which it is foreseen to suck the solution from the tank and to continuously filter the phosphating solution.

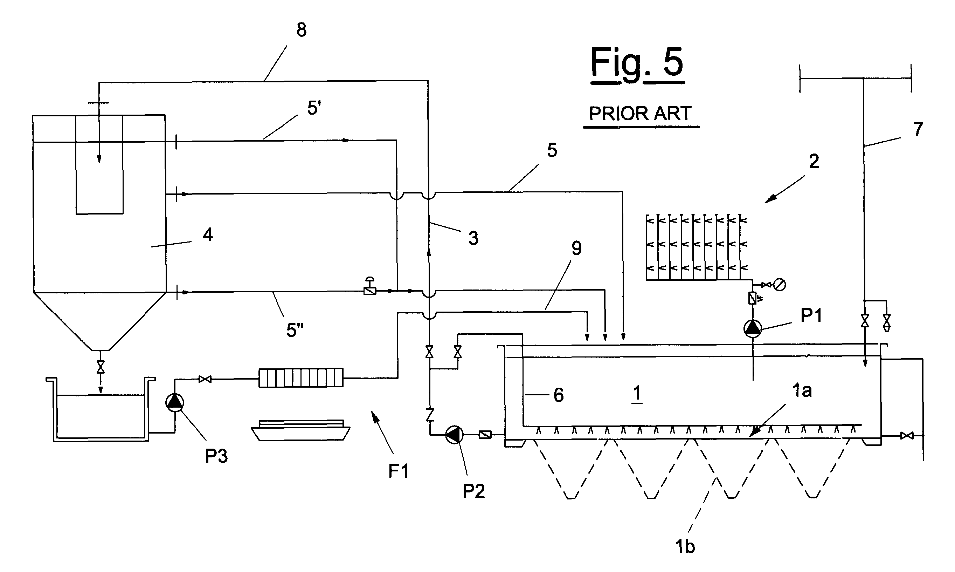

In figure 5, on the other hand, a different plant according to the prior art is illustrated, of the type in which the suction of the solution from the tank and the periodical filtration of the phosphating solution is carried out.

In general, the aforementioned plants comprise a phosphating tank 1, comprising a bottom 1a and supplied through a phosphating solution line 7.

The solution is withdrawn from such a tank through a pump P1 of a spraying system 2 that carries out the spraying of the products.

On the bottom of the phosphating tank 1 an extraction line 3 is foreseen equipped with an extraction pump P2 that withdraws the solution with the mud from the tank and sends it to an external purification or filtration system F1.

The concentrated mud is then separated and taken to the dump, whereas the clarified phosphating solution can be recovered and return into the tank through a recovery line 9.

The removal line 3 has a diversion 8 to supply a decanter reservoir 4 suitable for receiving the solution during the cleaning operations of the tank.

This system has a drawback that is difficult to overcome that concerns the mud deposits on the bottom of the phosphating tank.

Indeed, it is practically impossible to uniformly withdraw the deposited sludge because, even with an optimal arrangement of the suction pump, one cannot eliminate all of the accumulations on the bottom.

This is since the speed of the solution being sucked up by the pump P2 rapidly decreases starting from the suction point, until it reaches zero a short distance from it.

The system is also heavily influenced by the capacity of the pump interlocked to the filter and by the type of filter itself.

Plants realised in accordance with that which has been described here distinguish themselves for the type of filter used and for the presence or not of an agitation system 6 obtained through leakage from the line 3 after the pump P2 so as to readmit a part of the solution to be clarified to keep that which is still in the tank agitated, thus slowing down the sedimentation of the mud.

Therefore, a first system illustrated in figure 1 equipped with a sleeved filter and without such an agitation system 6 can be distinguished.

Such a system is used for plants with very limited production; it has substantial drawbacks both due to the easy clogging of the sleeves and due to their difficult maintenance.

The collected mud is not very substantial in dry residue and is no greater than 2÷3%.

As a further serious drawback, given the natural slowness of filtration through this type of filter, the capacity of the pump P2 must be very limited.

Consequently, large accumulations and deposits of mud are created on the bottom of the tank and, in a short space of time, the treatment loses its efficiency.

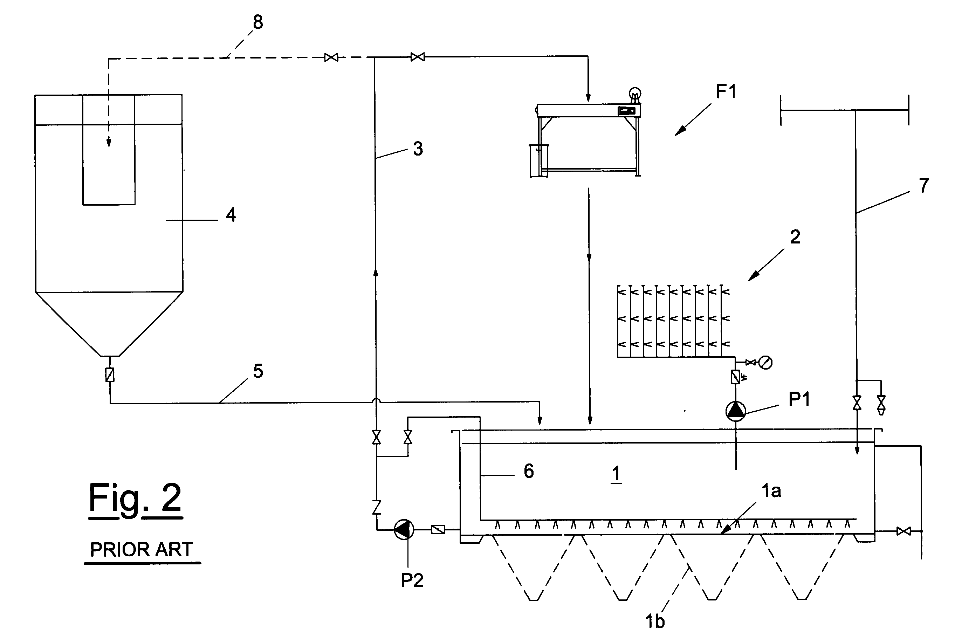

The second system illustrated in figure 2 foresees a filter F1 with a continuous band, and the presence of agitation; such a system is an improvement of the first system.

The band slides automatically and is collected, together with the mud, in an easily removable container with advantages of management and evacuation of mud.

Also in this case, the collected mud is not very substantial in dry residue.

There is uneconomical consumption of the filtering band whilst the remaining problems relative to the potentiality of mud-removal and of the accumulations in the tank are unchanged.

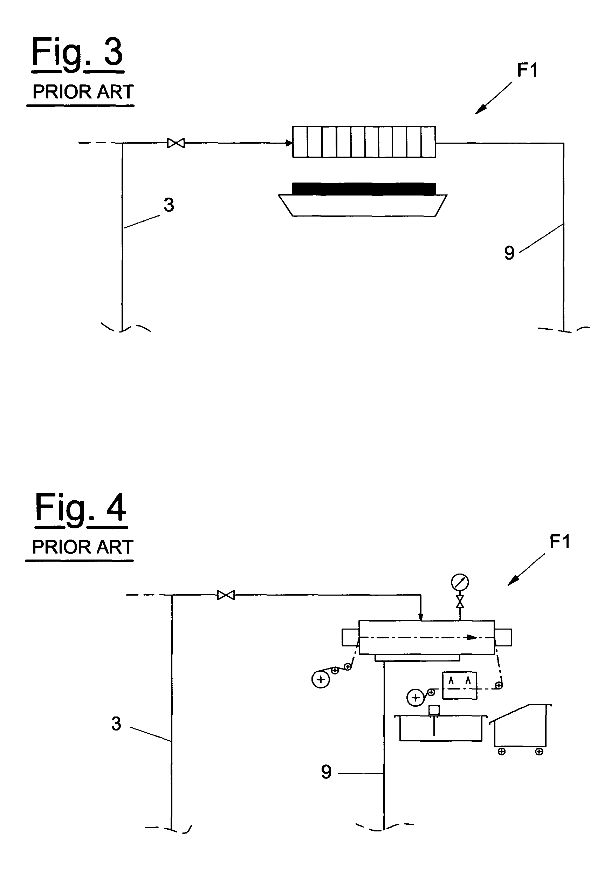

The third system foresees a presser filter, illustrated in particular in figure 3, represents a subsequent improvement.

Mud is produced with very high dry residue and, with a suitable piping system and a suitable capacity P2, the residue in the tank can be limited, but not eliminated.

The installation of a suitable presser filter, however, has the drawback of high cost.

A fourth system, illustrated in figure 4, foresees a continuous filter with a pressurised band.

This is the system that allows the withdrawal from the tank and that gives the best results amongst those according to the prior art.

The mud produced is substantial in amount and, with suitable capacity of P2, the residue in the tank is also limited, whilst on the other hand it is the most expensive system.

The phosphating tank, due to considerations of suitability and cost, is usually constructed with its bottom at ground level and, necessarily, with not much of a tilt.

There are also rare examples of tanks with an upturned pyramid-shaped bottom, so that, with a suitable tilt, the accumulated mud slides towards the suction device of P2.

Given the length of the phosphating tank and the angle of the pyramid that, to obtain a result, must be at least 60°, a certain number of pyramidal bottoms 1b are necessary according to the length of the tank.

In this case the suction of P2 is arranged in succession in the series of pyramids.

This type of construction is expensive, requires more maintenance and does not totally solve the problem of accumulations because, in any case, "lenses" of mud form at the suction of P2.

In any system amongst those described previously, it is necessary for there to be a decanter reservoir 4 for containing the solution in maintenance periods of the phosphating tank.

With reference to figure 5, a different system is schematised in which cleaning and mud-removal are carried out in programmed periods, normally at the end of workshifts.

The cycle foresees that the phosphating bath is emptied every evening so as to accurately clean both the tank and the accessories contained in it.

In a well-constructed plant, most of the operations can be automated.

The solution removed from the tank, in the meantime, is decanted in the external reservoir 4 and, after a predetermined time, the clarified solution returns to the tank in optimal conditions through lines 5, 5', 5" that connect the external reservoir 4 to the tank 1.

The mud produced is then collected and sent through a pump P3 to a filtration system F1 (usually pressurised) to be further pressed obtaining panels with a very high dry percentage, whereas the liquid phase is recovered.

The system according to these methods is frequently used, but there are at least three drawbacks inherent to it:
- the need for a certain degree of manual operations for the cleaning of the phosphating tank, with operations to be carried out outside of the normal workshifts with consequent higher workforce costs;
- the impossibility for the phosphating plant to work for more than two shifts per day;
- a non-constant percentage of mud in the tank, that passes from a minimum at the start of operations to a maximum at the end of phosphating. Indeed, although variable within a substantially limited range, the phosphating results are different through the day.

The main purpose of the present invention is therefore that of realising a mud-removal apparatus capable of operating continuously through removal of mud during the normal workshifts so as to allow the pollution inside the tank to be kept to optimal, i.e. very low, levels.

Another purpose of the invention is that of realising a tank that is small in size so that the apparatus is cost-effective to construct and compact, as well as simple to maintain and clean.

These and other purposes according to the present invention are accomplished by the mud-removal apparatus according to claim 1.

Further characteristics of the invention form the object of the dependent claims.

The mud-removal apparatus in particular intended for spray phosphating plants of products through zinc phosphates according to the invention comprises a phosphating tank containing a phosphating solution intended to supply a spray system that carries out the spraying of products, a reservoir for sedimentation intended to continuously receive the solution to be clarified, removed from the tank, connected to the phosphating tank and connected to a continuous filter for the filtration of the mud removed. The tank is used to carry out the continuous sedimentation of the mud and to send the phosphating tank a clarified solution suitable for lowering the concentration of mud in the phosphating tank and keep it in constant agitation.

The characteristics and advantages of a mud-removal apparatus according to the present invention shall become clearer from the following description, given as an example and not for limiting purposes, referring to the attached schematic drawings, in which:
- figures 1, 2 and 5 illustrate different diagrams of mud-removal plant according to the prior art;
- figures 3 and 4 illustrate filtration systems according to the prior art;
- figure 6 shows a diagram of a mud-removal apparatus according to the invention.

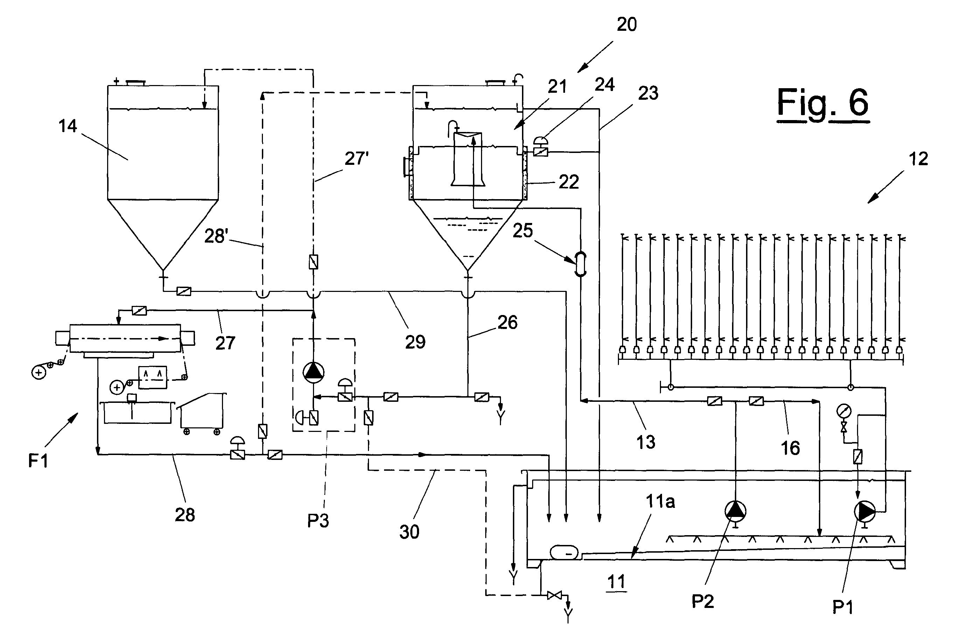

With reference to figure 6, a mud-removal apparatus in particular intended for spray phosphating plants of products through zinc phosphates comprises a phosphating tank 11 containing a phosphating solution intended to supply a spray system 12 that carries out the spraying of products, in general metal products intended for varnishing that are thus previously protected against corrosion.

The tank 11 is equipped with a bottom 11a tilted towards a discharge zone of the solution from the tank from which for this purpose a duct 30 extends through which the phosphating solution returning from spraying is removed from the tank and sent to a continuous decanting system 21 and then to a filtering system F1 with which the apparatus is equipped.

Such a filtering system F1 that can be chosen, based upon the presumed volumes of mud, to be continuous or discontinuous, is realised in the exemplified form of the invention as a continuous filter with a pressurised band.

The filter F1 is connected both to the decanting reservoir for normal work and to the phosphating tank 11 for maintenance work, so as to allow the continuous filtration of the mud and the clarification of part of the solution removed from the tank.

The apparatus according to the invention, in order to allow a sufficiently high flow rate of the solution to be clarified so as to reduce the sedimentation of mud in the phosphating tank 11, comprises a sedimentation reservoir 21 connected to the tank and intended to continuously receive the solution to be clarified to carry out the sedimentation of the mud and to send the phosphating tank 11 a clarified solution so as to lower the concentration of mud in the solution in the phosphating tank 11 and keep it in constant agitation.

The sedimentation reservoir 21, in the lower part, has a frusto-conical decanting section that is used as a continuous decanter of the mud.

The decanted mud is removed from the end point of the cone.

In such a way it is possible to realise a tank of relatively reduced size, up to 50% smaller than those according to the prior art, since the operating parameters of the apparatus, like for example the flow rate of solution through the filter F1, no longer restrict the occupancy time of the solution in the tank, which, since it is recirculated between phosphating tank and sedimentation reservoir, is independent from the aforementioned parameters.

The mud-removal apparatus foresees that the sedimentation reservoir 21 is equipped with a suitable insulating layer 22 to keep the temperature of the solution supplied into it constant.

The phosphating tank 11 is connected to the sedimentation reservoir 21 through a first supply line 13 of the solution to be clarified equipped with passage indicators 25.

Such a first supply line 13 of the solution to be clarified is also provided with a recirculation line 16 that has a plurality of nozzles at the end arranged along the tank to increase the agitation of the solution inside it and to carry out an effective cleaning thereof during maintenance.

Along such a first line 13, a transfer pump P2 is also foreseen, preferably used for transferring the solution to be clarified and also to avoid the sedimentation of mud in the phosphating tank 11.

The phosphating tank 11 is also connected to the sedimentation reservoir 21 through a second recirculation line 23 that can be intercepted through a commanded valve 24 so as to direct the clarified solution back to the phosphating tank.

The sedimentation reservoir 21 is also provided with a removal line 26 of the mud to which a removal pump P3 is connected to send the solution with a high concentration of mud to the filter F1.

Such a mud-removal line 26, downstream of said removal pump P3 branches into a line 27 directed to the filter F1 and a line 27' directed to supply a storage reservoir 14 suitable for containing the solution during the maintenance operations of the phosphating tank 11.

The mud-removal line 26 upstream of said removal pump P3 foresees the insertion of the emptying duct 30 coming from the bottom of the phosphating tank.

The filter F1 has, in output, a clarified solution line 28 directed to the phosphating tank 11 that branches into a recirculation line 28' of the clarified solution suitable for supplying said sedimentation reservoir 21.

With the apparatus according to the present invention the predetermined purposes are accomplished, in particular:
- the mud content in the phosphating tank 11 is kept at a constant concentration, at levels lower than the optimal concentration for good phosphating treatment.
- the mud-removal treatment is continuous and interruptions in production are not necessary.
- the use of a phosphating tank with volumes reduced to less than 50% with respect to those normally in use and considered indispensable for correct phosphating; in this way it is simple to keep the liquid in agitation and to avoid deposits on the bottom. The reduced size in any case ensures easy maintenance and cleaning.
- the volume of liquid missing from the tank and necessary to keep a good chemical and thermal reserve is ensured by a suitably insulated sedimentation reservoir.
- continuous circulation between the tank and the reservoir is established so as to homogenise the solution contained in it.

## Claims

1. Mud-removal apparatus in particular intended for spray phosphating plants of products through zinc phosphates comprising a phosphating tank (11) containing a phosphating solution intended to supply a spray system (12) that carries out the spraying of products, **characterised in that** it comprises a sedimentation reservoir (21) connected to said tank, intended to continuously receive the solution to be clarified to carry out the sedimentation of the mud and to send said tank a clarified solution suitable for lowering the concentration of mud in said phosphating tank (11) and also keep said solution in constant agitation and a continuous filter (F1) connected to the sedimentation reservoir (21) and to the phosphating tank (11) for the filtration of the mud and the clarification of the solution removed from the phosphating tank (11).

2. Mud-removal apparatus according to claim 1, wherein said phosphating tank (11) has a bottom (11a) tilted in the direction of an emptying duct (30).

3. Mud-removal apparatus according to claim 1, wherein said sedimentation reservoir (21) is provided with a suitable insulating layer (22) to keep the temperature of the solution supplied into it constant.

4. Mud-removal apparatus according to claim 1, wherein said phosphating tank (11) is connected to said sedimentation reservoir (21) through a first supply line (13) of the solution to be clarified equipped with passage indicators (25).

5. Mud-removal apparatus according to claim 4, wherein said first supply line (13) of the solution to be clarified is also provided with a recirculation line (16) and is equipped with a pump (P2) for pumping the solution to be clarified.

6. Mud-removal apparatus according to claim 1, wherein said phosphating tank (11) is also connected to said sedimentation reservoir (21) through a second recirculation line (23) that can be intercepted through a commanded valve (24).

7. Mud-removal apparatus according to claim 6, wherein said sedimentation reservoir (21) is also provided with a mud-removal line (26) to which an extraction pump (P3) is connected to send the solution with high mud concentration to said filter (F1).

8. Mud-removal apparatus according to claim 7, wherein said mud-removal line (26) downstream of said removal pump (P3) branches into a line (27) directed to the filter (F1) and a line (27') directed to supply a storage reservoir (14) suitable for containing the solution during the maintenance operations of the phosphating tank (11).

9. Mud-removal apparatus according to claim 8, wherein said mud-removal line (26) upstream of said removal pump (P3) foresees the insertion of the said emptying duct (30).

10. Mud-removal apparatus according to claim 6, wherein said filter (F1) has a clarified solution line (28) directed to the phosphating tank (11) branching into a recirculation line (28') of the clarified solution suitable for supplying said sedimentation reservoir (21).
